# EUROPÄISCHE PATENTSCHRIFT

(11) **EP 1 946 975 B1**
(45) Veröffentlichungstag und Bekanntmachung des Hinweises auf die Patenterteilung: **31.10.2012**
(21) Anmeldenummer: 08000617.4
(22) Anmeldetag: 15.01.2008
(51) Int. Cl.: B60R 19/24

(54) **Vorrichtung zur Abstützung eines Stoßfängerüberzugs eines Stoßfängers**
Device for supporting the outer skin of a bumper
Dispositif de fixation d'une peau de pare-chocs

(30) Priorität: 16.01.2007 DE 102007002214
(43) Veröffentlichungstag der Anmeldung: 23.07.2008
(73) Patentinhaber: AUDI AG, 85045 Ingolstadt (DE)
(72) Erfinder: Ott, Jürgen, 93333 Hienheim (DE); Günter, Siegfried, 85055 Etting (DE)
(74) Vertreter: Patzelt, Heike Anna Maria

(56) Entgegenhaltungen:
- EP-A- 0 155 764
- DE-A1- 2 509 718
- DE-A1- 3 928 876
- DE-A1- 4 136 230

## Beschreibung

Die Erfindung betrifft eine Vorrichtung zur Abstützung eines Stoßfängerüberzugs eines Stoßfängers an einem Stoßfängerquerträger. Des weiteren betrifft die Erfindung einen Stoßfänger für ein Kraftfahrzeug mit einem mit der Karosserie des Kraftfahrzeugs verbundenen Stoßfängerquerträger und mit einem Stoßfängerüberzug.

In der DE 39 28 876 C2 ist eine Vorrichtung zur Abstützung eines Stoßfängerüberzugs eines Stoßfängers an einem Trägerelement beschrieben, bei welcher innerhalb des Trägerelements ein Abstandseinstellelement angeordnet ist, mittels welchem der Stoßfängerüberzug in der Höhe justiert werden kann. Das Abstandseinstellelement ist mittels eines durch eine Öffnung in dem Stoßfängerüberzugvon außerhalb des Stoßfängerüberzugs zugänglichen Werkzeugs verstellbar, um die Höhe des Stoßfangerüberzugs zu justieren.

Weitere solche Vorrichtungen sind aus der DE 43 05 887 C1 und der DE 43 33 695 C1 bekannt. Nachteilig bei diesen Lösungen ist jedoch die aufwändige Einstellarbeit und die schwierige Zugänglichkeit des Abstandseinstellelements, wodurch zwar eine ausreichende Abstützung des Stoßfängerüberzugs an dem Trägerelement erreicht werden kann, eine exakte Einstellung des Spalts zwischen dem Stoßfängerüberzug und einem sich an denselben anschließenden Karosserieteil jedoch nicht möglich ist. Gerade solche Spalte zwischen verschiedenen Bauteilen im Außenbereich einer Karosserie eines Kraftfahrzeugs werden jedoch immer häufiger zur Beurteilung der Qualität eines Kraftfahrzeugs herangezogen, so dass geringen und insbesondere gleichmäßigen Spaltmaßen eine immer größere Bedeutung zukommt.

Bei sämtlichen dieser Vorrichtungen wird jedoch stets der gesamte Stoßfängerquerträger mit dem damit verbundenen Stoßfängerüberzug gegenüber karosserieseitigen Halteelementen verstellt, was einen recht großen Aufwand darstellt. Eine exakte Einstellung des Spaltmaßes ist bei diesen Vorrichtungen nicht möglich.

Es ist daher Aufgabe der vorliegenden Erfindung, eine Vorrichtung zur Abstützung eines Stoßfängerüberzugs eines Stoßfängers an einem Stoßfängerquerträger zu schaffen, mit welcher nicht nur eine sichere Abstützung des Stoßfängerüberzugs bei hohen Kräften gewährleistet ist, sondern auch ein Spaltmaß zwischen dem Stoßfängerüberzug und einem sich an denselben anschließenden Karosserieteil exakt und auf möglichst einfache Art und Weise eingestellt werden kann.

Erfindungsgemäß wird diese Aufgabe durch die in Anspruch 1 genannten Merkmale gelöst

Dadurch, dass das Abstandseinstellelement durch das von außerhalb des Stoßfängerüberzugs zugängliche Verstellelement verstellt werden kann, ist es auf sehr einfache Weise möglich, den Stoßfängerüberzug exakt gegenüber einem sich an denselben anschließenden Karosserieteil einzustellen, wodurch auch geringe Spaltmaße sehr exakt und mit geringem Aufwand eingehalten werden können. Die Zugänglichkeit zu dem Verstellelement ergibt sich in sehr einfacher Weise durch eine Öffnung in dem Stoßfängerüberzug, wodurch das Einstellen des Spaltmaßes erheblich erleichtert wird.

Hierbei dient das Abstandseinstellelement gleichzeitig als Abstützelement zum Abstützen des Stoßfängerüberzugs an dem Stoßfängerquerträger, so dass der Stoßfängerüberzug auch verhältnismäßig hohe Kräfte aufnehmen kann, ohne dass die Gefahr besteht, dass er seine bei der Montage eingestellte Position verlässt.

Eine besonders einfache Verstellung des Abstandseinstellelements gegenüber dem Stoßfängerüberzug ergibt sich, wenn in einer vorteilhaften Weiterbildung der Erfindung das Abstandseinstellelement über ein Gewinde mit einem mit dem Stoßfängerüberzug in Verbindung stehenden Versteifungselement verbunden und gegenüber demselben verstellbar ist.

Die Verbindung zwischen dem Abstandseinstellelement und dem Verstellelement kann in einer weiteren vorteilhaften Ausgestaltung dadurch erreicht werden, dass diese beiden Elemente jeweilige Zahnräder aufweisen, über welche sie miteinander verbunden sind. Durch diese Zahnräder ergibt sich ein Getriebe, welches die Bewegung des Verstellelements auf das Abstandseinstellelement und dadurch auf den Stoßfängerüberzug überträgt

In Anspruch 7 ist ein Stoßfänger für ein Kraftfahrzeug mit einem Stoßfängerquerträger und einem Stoßfängerüberzug sowie einer erfindungsgemäßen Vorrichtung angegeben.

Weitere vorteilhafte Ausgestaltungen und Weiterbildungen der Erfindung ergeben sich aus den restlichen Unteransprüchen. Nachfolgend ist eine Ausführungsbeispiel der Erfindung anhand der Zeichnung prinzipmäßig dargestellt.

Es zeigt:
- Fig. 1: eine sehr schematische Draufsicht auf einen erfindungsgemäßen Stoßfänger; und
- Fig. 2: einen Schnitt durch den Stoßfänger nach der Linie II-II aus Fig. 1.

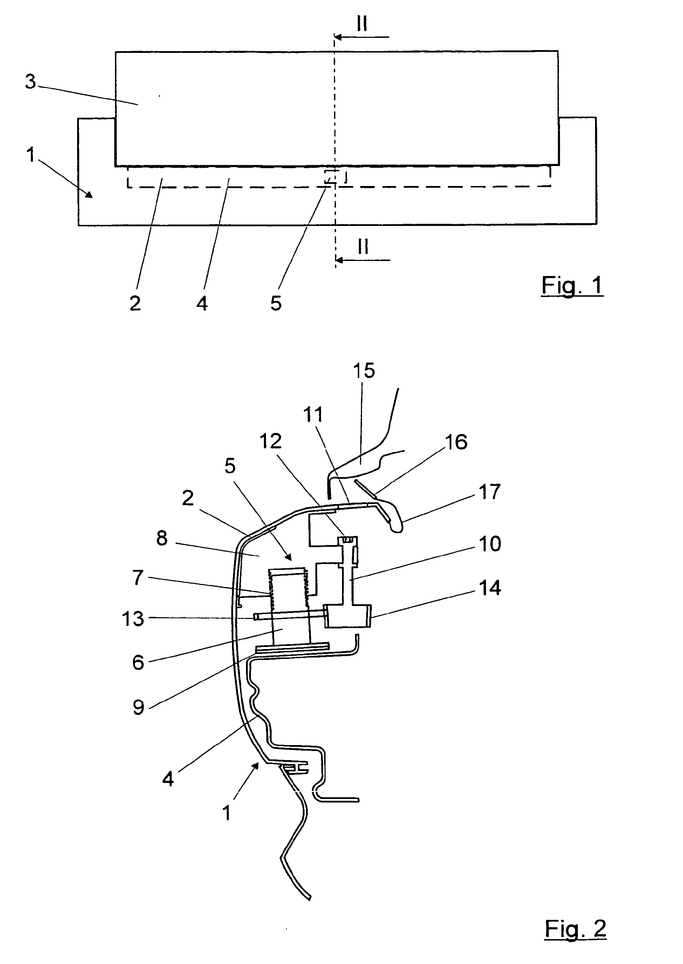

Ein in Fig. 1 sehr schematisch dargestellter Stoßfänger 1 für ein in seiner Gesamtheit nicht dargestelltes Kraftfahrzeug weist in an sich bekannter Weise einen die Außenhaut des Stoßfängers 1 bildenden Stoßfängerüberzug 2 auf, der an einer nur teilweise dargestellten Karosserie 3 des Kraftfahrzeugs angebracht ist. Der Stoßfänger 1 weist des weiteren ein fest mit der Karosserie 3 verbundenes Trägerelement 4 auf, das in an sich bekannter Weise als in Längsrichtung des Stoßfängers 1 verlaufender Stoßfängerquerträger ausgebildet und mit einer gestrichelten Linie dargestellt ist. Zur Abstützung des Stoßfängerüberzugs 2 an dem Trägerelement 4 dient eine zwischen dem Stoßfängerüberzug 2 und dem Trägerelement 4 angeordnete, ebenfalls mittels einer gestrichelten Linie dargestellte Vorrichtung 5, von der über die Breite des Stoßfängers 1 auch mehrere vorhanden sein können. Prinzipiell ist die Anzahl der Vorrichtungen 5 über die Breite des Stoßfängers 1 beliebig und hängt insbesondere von der zu erwartenden Belastung des Stoßfängerüberzugs 2 und der Breite des Stoßfängers 1 ab.

Die Vorrichtung 5 ist in dem Schnitt durch den Stoßfänger 1 in Fig. 2 detailliert dargestellt. So weist die Vorrichtung 5 ein sich an dem Trägerelement 4 abstützendes und auf der dem Trägerelement 4 gegenüberliegenden Seite auf den Stoßfängerüberzug 2 wirkendes Abstützelement auf, mit dem, wie nachfolgend beschrieben, auch der Abstand zwischen dem Stoßfängerüberzug 2 und dem Trägerelement 4 eingestellt werden kann, weshalb es nachfolgend als Abstandseinstellelement 6 bezeichnet wird. Das Abstandseinstellelement 6 ist über eine Gewindeverbindung 7 mit einem mit dem Stoßfängerüberzug 2 in Verbindung stehenden Versteifungselement 8 verbunden und auf diese Weise gegenüber demselben verstellbar. Das Versteifungselement 8, welches auch als Stoßfänger-Schließteil bezeichnet wird, verläuft im wesentlichen über die gesamte Breite des Stoßfängers 1, ist verhältnismäßig massiv ausgeführt und verleiht dem Stoßfängerüberzug 2 somit die erforderliche Steifigkeit. Hierbei kann das Versteifungselement 8 einteilig oder auch separat von dem Stoßfängerüberzug 2 ausgeführt sein.

Da sich das Abstandseinstellelement 6 an dem Trägerelement 4 abstützt, führt eine Verdrehung des Abstandseinstellelement 6 zu einer Vertikalbewegung des Versteifungselements 8 und damit des Stoßfängerüberzugs 2, da das Trägerelement 4 starr mit der Karosserie 3 verbunden ist und sich daher nicht verschieben lässt. Zum Ausgleich eventueller Unebenheiten bzw. Formtoleranzen des Trägerelements 4 ist zwischen dem Abstandseinstellelement 6 und dem Trägerelement 4 im vorliegenden Fall eine Schaumstoffunterlage 9 angeordnet.

Die Verstellung des Abstandseinstellelement 6 erfolgt über ein im vorliegenden Fall an dem Versteifungselement 8 drehbar gelagertes Verstellelement 10, welches über eine Öffnung 11 in dem Stoßfängerüberzug 2 von außen, d. h. von außerhalb des Stoßfängerüberzugs 2, zugänglich ist. Das Verstellelement 10 weist eine im vorliegenden Fall als Innensechskant 12 ausgebildete Einrichtung auf, welche dazu dient, von einem entsprechenden Werkzeug, das im vorliegenden Fall also mit einem Inbusschlüssel versehen ist, in Eingriff genommen zu werden, um in Rotation versetzt werden zu können. Vorzugsweise ist das Werkzeug als Schraubwerkzeug ausgebildet, dessen Anzugsdrehmoment eingestellt werden kann. Durch das Verstellelement 10 wird das Abstandseinstellelement 6 auf Anschlag zu dem Trägerelement 4 gebracht und anschließend kann ein bestimmtes Spaltmaß zwischen dem Stoßfängerüberzug 2 und einem Karosserieteil eingestellt werden.

Die Verbindung des Verstellelements 10 mit dem Abstandseinstellelement 6 erfolgt über jeweilige Zahnräder 13 und 14, die miteinander in Eingriff sind, wobei das Zahnrad 13 dem Abstandseinstellelement 6 und das Zahnrad 14 dem Verstellelement 10 zugeordnet ist. Die beiden Zahnräder 13 und 14 bilden also ein Getriebe, das den Antrieb des Abstandseinstellelements 6 über das Verstellelement 10 ermöglicht. Alternativ zu der dargestellten Ausführungsform mit den beiden Zahnrädern 13 und 14 könnte das Getriebe selbstverständlich auch als Riemengetriebe ausgebildet sein, wobei sich die beiden Zahnräder 13 und 14 als hinsichtlich der Wartung optimal herausgestellt haben.

Die Öffnung 11 ist derart in den Stoßfängerüberzug 2 angeordnet, dass sie sich unter einer Kofferraumklappe 15 des Kraftfahrzeugs befindet und damit zwar bei der Montage des Stoßfängers 1 an der Karosserie 3 zugänglich ist, während des Betriebs des Kraftfahrzeugs jedoch nicht erkennbar ist. Des weiteren kann die Öffnung 11, von der über die Breite des Stoßfängers 1 eine der Anzahl der Vorrichtungen 5 entsprechende Anzahl vorgesehen ist, mittels eines Deckels 16 abgedeckt werden, welcher über ein Seil 17 mit dem Stoßfängerüberzug 2 verbunden ist. Der Stoßfängerüberzug 2 kann auch an anderen Stellen mit dem Trägerelement 4 verbunden sein, was jedoch nicht dargestellt ist, da es für die Erfindung keine Rolle spielt.

Die Einstellung des Spaltmaßes zwischen dem Stoßfängerüberzug 2 und dem entsprechenden Teil der Karosserie 3, beispielsweise der Kofferraumklappe 15, erfolgt durch Verdrehen des Verstellelements 10 und der damit einhergehenden Verdrehung des Abstandseinstellelements 6 und damit der Bewegung des Versteifungselements 8 in vertikaler Richtung, und zwar in einem sehr geringen Verstellbereich, der beispielsweise +/- 1 mm betragen kann. In diesem Bereich ist der Stoßfängerüberzug 2 problemlos elastisch verformbar.

Im vorliegenden Fall handelt es sich um den hinteren Stoßfänger des Kraftfahrzeugs, gegebenenfalls wäre die Vorrichtung 5 jedoch auch für einen vorderen Stoßfänger einsetzbar.

## Patentansprüche

1. Vorrichtung zur Abstützung eines Stoßfängerüberzugs (2) eines Stoßfängers (1) an einem in Längsrichtung des Stoßfängers (1) verlaufenden Stoßfängerquerträger (4), mit einem zwischen dem Stoßfängerüberzug (2) und dem Stoßfängerquerträger (4) angeordneten, sich an dem Stoßfängerquerträger (4) abstützenden und auf der dem Stoßfängerquerträger (4) gegenüberliegenden Seite auf den Stoßfängerüberzug (2) wirkenden Abstandseinstellelement (6), und mit einem innerhalb des Stoßfängerüberzugs (2) angeordneten Verstellelement (10), wobei das Verstellelement (10)
durch eine Öffnung (11) in dem Stoßfängerüberzug (2) von außerhalb des Stoßfängerüberzugs (2) für ein Werkzeug zugänglich ist, um das Abstandseinstellekluent (6) gegenüber dem Stoßfängerüberzug (2) zu verstellen.

2. Vorrichtung nach Anspruch 1,
**dadurch gekennzeichnet, dass**
das Abstandseinstellelement (6) über eine Gewindeverbindung (7) mit einem mit dem Stoßfängerüberzug (2) in Verbindung stehenden Versteifungselement (8) verbunden und gegenüber demselben verstellbar ist.

3. Vorrichtung nach Anspruch 1 oder 2,
**dadurch gekennzeichnet, dass**
das Abstandseinstellelement (6) und das Verstellelement (10) jeweilige Zahnräder (13,14) aufweisen, über welche sie miteinander verbunden sind.

4. Vorrichtung nach Anspruch 1, 2 oder 3,
**dadurch gekennzeichnet, dass**
die Öffnung (11) mittels eines Deckels (16) abdeckbar ist.

5. Vorrichtung nach einem der Ansprüche 1 bis 4,
**dadurch gekennzeichnet, dass**
das Verstellelement (10) eine Einrichtung aufweist, welche in der Lage ist, mit einem Werkzeug in Eingriff zu gehen.

6. Vorrichtung nach einem der Ansprüche 1 bis 5,
**dadurch gekennzeichnet, dass**
zwischen dem Abstandseinstellelement (6) und dem Trägerelement (4) eine Schaumstoffunterlage (9) angeordnet ist.

7. Stoßfänger (1) für ein Kraftfahrzeug mit einem mit der Karosserie (3) des Kraftfahrzeugs verbundenen, in Längsrichtung des Stoßfängers (1) verlaufenden Stoßfängerquerträger (4) und mit einem Stoßfängerüberzug(2), wobei zwischen dem Stoßfängerquerträger (4) und dem Stoßfängerüberzug (2) wenigstens eine Vorrichtung (5) nach einem der Ansprüche 1 bis 6 angeordnet ist.

## Claims

1. Device for supporting a bumper cover (2) of a bumper (1) on a bumper crossbeam (4) extending in the longitudinal direction of the bumper (1), comprising a distance setting element (6) which is arranged between the bumper cover (2) and the bumper crossbeam (4), is supported on the bumper crossbeam (4) and acts on the bumper cover (2) on the side opposite the bumper crossbeam (4), and comprising an adjustment element (10) arranged inside the bumper cover (2), wherein the adjustment element (10) is accessible to a tool from the outside of the bumper cover (2) through an opening (11) in the bumper cover (2) for adjusting the distance setting element (6) relative to the bumper cover (2).

2. Device according to claim 1, **characterised in that** the distance setting element (6) is connected via a threaded connection (7) to a reinforcing element (8) connected to the bumper cover (2) and is adjustable relative to said reinforcing element.

3. Device according to either claim 1 or claim 2, **characterised in that** the distance setting element (6) and the adjustment element (10) each comprise a gear wheel (13, 14) and are interconnected via these gear wheels.

4. Device according to any of claims 1, 2 or 3, **characterised in that** the opening (11) can be covered by a cover (16).

5. Device according to any of claims 1 to 4, **characterised in that** the adjustment element (10) comprises a means which is capable of engaging with a tool.

6. Device according to any of claims 1 to 5, **characterised in that** a foam pad (9) is arranged between the distance setting element (6) and the support element (4).

7. Bumper (1) for a motor vehicle comprising a bumper crossbeam (4) which is connected to the body (3) of the motor vehicle and extends in the longitudinal of the bumper (1) and comprising a bumper cover (2), wherein at least one device (5) according to any of claims 1 to 6 is arranged between the bumper crossbeam (4) and the bumper cover (2).

## Revendications

1. Dispositif de fixation de la peau (2) d'un pare-chocs (1) sur une poutre transversale (4) du pare-chocs s'étendant dans la direction longitudinale du pare-chocs (1), avec un élément de réglage de distance (6) aménagé entre la peau (2) de pare-chocs et la poutre transversale (4) du pare-chocs, s'appuyant sur la poutre transversale (4) du pare-chocs et agissant sur la peau (2) du pare-chocs du côté opposé à la poutre transversale (4) du pare-chocs, et avec un élément de réglage (10) aménagé à l'intérieur de la peau (2) du pare-chocs, dans lequel l'élément de réglage (10) est accessible à un outil à travers une ouverture (11) dans la peau (2) du pare-chocs de l'extérieur de la peau (2) du pare-chocs pour régler l'élément de réglage de distance (6) par rapport à la peau (2) du pare-chocs.

2. Dispositif selon la revendication 1,
**caractérisé en ce que**
l'élément de réglage de distance (6) est lié via une liaison filetée (7) à un élément raidisseur (8) qui est relié à la peau (2) du pare-chocs et peut être réglé par rapport à celle-ci.

3. Dispositif selon la revendication 1 ou la revendication 2,
**caractérisé en ce que**
l'élément de réglage de distance (6) et l'élément de réglage (10) présentent des roues dentées respectives (13, 14) par lesquelles ils sont reliés l'un à l'autre.

4. Dispositif selon la revendication 1, 2 ou 3, **caractérisé en ce que**
l'ouverture (11) peut être recouverte par un couvercle (16).

5. Dispositif selon l'une quelconque des revendications 1 à 4,
**caractérisé en ce que**
l'élément de réglage (10) présente un dispositif qui est en mesure d'être engagé par un outil.

6. Dispositif selon l'une quelconque des revendications 1 à 5,
**caractérisé en ce que**
une base de mousse (9) est appliquée entre l'élément de réglage de distance (6) et l'élément de poutre (4).

7. Pare-chocs (1) pour véhicule automobile avec une poutre transversale (4) de pare-chocs liée à la carrosserie (3) du véhicule automobile et s'étendant dans la direction longitudinale du pare-chocs (1) et avec une peau (2) de pare-chocs, dans lequel au moins un dispositif (5) selon l'une quelconque des revendications 1 à 6 est aménagé entre la poutre transversale (4) du pare-chocs et la peau (2) du pare-chocs.
